# EUROPEAN PATENT APPLICATION

(11) **EP 1 773 080 A2**
(43) Date of publication of application: **11.04.2007**
(21) Application number: 06255164.3
(22) Date of filing: 06.10.2006
(51) Int. Cl.: H04Q 7/32

(54) **Reading user information**

(30) Priority: 06.10.2005 GB 0520351
(71) Applicant: Vodafone Group PLC, Newbury Berkshire RG14 2FN (GB)
(72) Inventor: Manning, Stephanie, Reading, Berkshire RG14 2FN (GB); Childs, Robert c/o Vodafone House, Newbury, Berkshire RG14 2FN (GB)
(74) Representative: Hartley, Andrew Philip

(57) **Abstract**

A device 42 is disclosed for storing data and which is associated with a mobile or cellular telecommunications network SIM 15. The device 42 includes a store 44 for storing the data and near field communication means for enabling the data to be read from the store 44. The device 42 may be embodied in a mobile telecommunications device 1. The device 42 may be read by a near field communication reader 48. This reading may be performed by the reader 48 providing power to the device 42. Therefore, data can be read from the store 44 of the device 42 even if the mobile terminal 1 is damaged or has an exhausted battery. The store 44 of the device 42 may be synchronised with a SIM memory 38. The data stored in the store 44 may be medical data. This medical data may be retrieved by medical personnel using an appropriate reader 48.

## Description

The present invention relates to a device for storing data and which is associated with a mobile or cellular telecommunications network subscriber identity module (SIM). The present invention also relates to a mobile or cellular telecommunications terminal including such a device.

Mobile or cellular telecommunications network SIMs are used to authenticate subscribers with mobile or cellular telecommunications networks. Such SIMs are also known to store other data, such as a list of telephone numbers of a subscriber's contacts.

Mobile or cellular telecommunications terminals include a SIM reader. A SIM is electrically coupled to the SIM reader of a mobile telecommunications terminal which allows electrical communication between the telecommunications terminal and the SIM for the exchange of data between the two entities. This coupling of the telecommunications terminal and the SIM allows authenticated communications between the telecommunications terminal and the network to occur using authentication data stored on the SIM.

In many countries a high proportion of the population own and carry with them regularly mobile telecommunications devices, including the SIM coupled thereto.

According to a first aspect of the invention, there is provided a device for storing data which is associated with a mobile or cellular telecommunications network subscriber identity module (SIM), the device including a store for storing said data and near field communication means for enabling the data to be read from the store.

The device may be provided on or in the SIM, or may be provided on or in a mobile or cellular telecommunications terminal. For example, the device may comprise a separate chip provided in the mobile telecommunications terminal that is connected to the SIM by a wired connection to the SIM contact pad provided in the terminal (which also couples the SIM to the terminal to provide data exchange between the SIM and terminal in the conventional way).

The store of the device may store useful information personal to the user of the SIM**,** such as medical information - for example blood type, physician contact and/or organ donor status. Of course, the store may store any other useful information, such as biometric data of the user, next of kin, user identification data and/or the user's picture.

The near field communication (NFC) means for enabling the data to be read from the store provides an efficient mechanism for reading the data in the store by a third party device. Near field communication technology allows data to be read by a reader that is typically up to 20 centimetres distance from the store. The reader device could, for example, be a device provided in a hospital and used by a physician to collect data about a patient by bringing the reader device within the near field communication range of the store of the device, which is provided on or in the user's mobile telecommunications terminal or on or in the SIM for use with the terminal. The physician will therefore be able to quickly and simply extract personal data about the patient. This data could be stored by the reader device for later use by the physician or for records purposes.

Advantageously, the SIM may include a memory for storing the data. This memory is in addition to the store provided in the device. Synchronisation means may be provided for synchronising the data between the SIM memory and the store of the device. For example, the data stored in the store may be entered using the mobile terminal, as this provides a convenient user interface. Of course, the data could be entered by any other mechanism - for example, transmitted over the air by the mobile telecommunications network. The SIM memory may be separate from other memory provided on the SIM for other, conventional purposes. In the embodiment, when the SIM is initially connected to the mobile terminal, data from the SIM memory is read from the SIM memory and placed in the store of the device. Advantageously, the store may periodically compare its contents to that of the SIM memory to determine whether the data in the SIM memory has been updated. If an update is determined to be necessary, the data from the SIM memory is read and stored in the store. The synchronising means may be provided by the SIM or by the mobile terminal. Such an arrangement allows the data stored in the device store and the SIM memory to be mirrored. The SIM memory provides a backup of the device store and also provides a means by which the device store can be updated.

When the store is read by a reader which is an active near field apparatus, that apparatus advantageously may energise the device, providing power to the device, and allowing the data to be read therefrom. This may allow the data to be read even if the mobile terminal and/or the SIM is inoperative, damaged or has its battery flat or missing. Advantageously, the device store may be powered independently of the mobile terminal or the SIM. Alternatively, if the mobile terminal is operating correctly and the battery is providing power, then energising from an external active near field apparatus is unnecessary, and the data from the store may be read by other means.

The present invention also provides a mobile or cellular telecommunications terminal including a device for storing data and which is associated with a mobile or cellular telecommunications network subscriber identity module (SIM), the device including a store for storing said data and near field communication means for enabling the data to be read from the store. The terminal may additionally include the subscriber identity module.

For a better understanding of the invention, an embodiment will now be described by way of example with reference to the accompanying drawings in which:
Figure 1 shows schematically a mobile or cellular telecommunications network; and
Figure 2 shows schematically a mobile or cellular telecommunications terminal incorporating a device for storing data in accordance with the invention.

In the drawings like elements are generally designated with the same reference numerals.

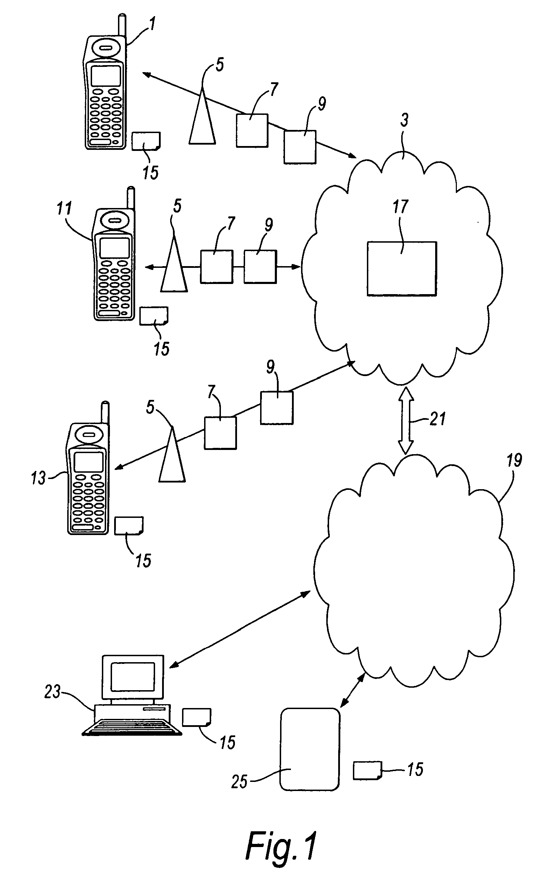

Figure 1 shows a mobile or cellular network. However, it should be appreciated that the invention is applicable to any type of network, although it is particularly applicable to a network where at least some of the devices communicate using mobile telecommunications/wireless data transmission. Mobile terminal 1 is registered with GSM/GPRS or UMTS (3G) mobile telecommunications network 3. The mobile terminal 1 may be a handheld mobile telephone, a personal digital assistant (PDA) or a laptop computer equipped with a datacard. The mobile terminal 1 communicates wirelessly with mobile telecommunications network 3 via the radio access network (RAN) of the mobile telecommunications network 3, comprising, in the case of a UMTS network, base station (Node B) 5, and radio network controller (RNC) 7. Communications between the mobile terminal 1 and the mobile telecommunications network 3 are routed from the radio access network via GPRS support nodes (SGSN) 9, which may be connected by a fixed (cable) link to the mobile telecommunications network 3.

In the conventional manner, a multiplicity of other mobile terminals are registered with the mobile telecommunications network 3. These mobile terminals include mobile terminals 11 and 13. The terminals 11 and 13 communicate with the mobile telecommunications network 3 in a similar manner to the terminal 1, that is via an appropriate Node B 5, RNC 7 and SGSN 9.

The mobile telecommunications network 3 includes a gateway GPRS support node (GGSN) 17 which enables IP-based communications with other networks, such as the Internet 19 via an appropriate link 21. A multiplicity of terminals are connected to the Internet (by fixed or wireless links), and a PC terminal 23 and a PDA terminal 25 are shown by way of example.

Each of the mobile terminals 1,11 and 13 is provided with a respective subscriber identity module (SIM) 15. During the manufacturing process of each SIM, authentication information is stored thereon under the control of the mobile telecommunications network 3. The mobile telecommunications network 3 itself stores details of each of the SIMs issued under its control. In operation of the mobile telecommunications network 3, a terminal 1, 11, 13 is authenticated (for example, when the user activates the terminal in the network with a view to making or receiving calls) by the network sending a challenge to the terminal 1,11,13 incorporating a SIM 15, in response to which the SIM 15 calculates a reply (dependent on the predetermined information held on the SIM - typically an authentication algorithm and a unique key Ki) and transmits it back to the mobile telecommunications network 3. The mobile telecommunications network 3 includes an authentication processor 17 which generates the challenge and which receives the reply from the terminal 1,11,13. Using information pre-stored concerning the content of the relevant SIM 15, the authentication processor calculates the expected value of the reply from the mobile terminal 1,11,13. If the reply received matches the expected calculated reply, the SIM 15 and the associated mobile terminal are considered to be authenticated.

It should be understood that such an authentication process can be performed for any terminal provided with a SIM 15 under control of the mobile telecommunications network 3. In the embodiment the terminal communicates wirelessly with the mobile telecommunications network 3 via the network's radio access network, although this is not essential. For example, the terminal may communicate with the network via the fixed telephone network (PSTN), via a UMA "access point" and/or via the Internet. The PC 23 and the PDA 25 may also be provided with a SIM 15 under the control of the network.

The SIM 15 used by the terminal 1,11,13,23,25 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

It should be noted that the authentication process being described does not necessarily authenticate the human identity of the user. For example, mobile telecommunication networks have pre-pay subscribers who are issued with SIMs in return for pre-payment, enabling them to use network services. However, the identity of such pre-pay subscribers may not be known by the network. Nevertheless, such a user cannot make use of the network until the network has authenticated the user's SIM - that is, has confirmed that such user is a particular user who has a particular pre-paid account with a network.

The network shown in Figure 1 comprises both the mobile telecommunications network 3 and the Internet 19 (which itself comprises a multiplicity of other networks).

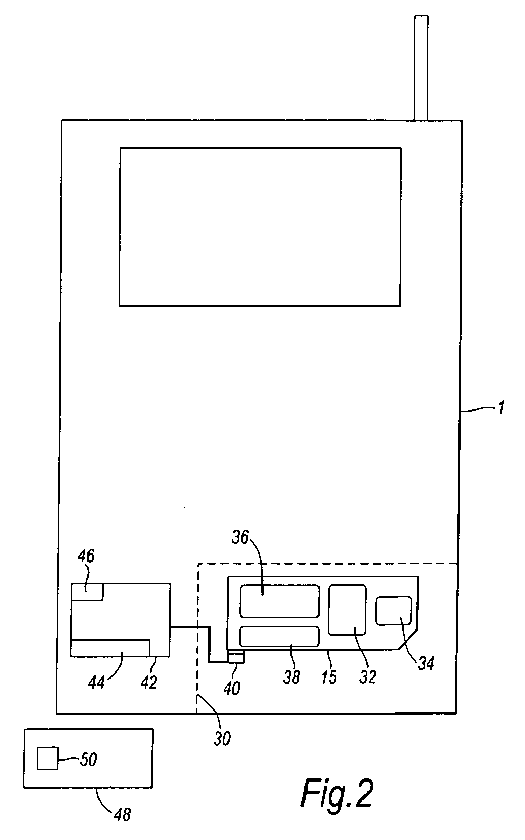

Figure 2 shows in more detail the mobile terminal 1 and the SIM 15 associated with it. In the conventional manner, the SIM 15 is operatively coupled to the mobile terminal 1 by placing the SIM in a SIM card reader 30. Conventionally, a SIM in accordance with the GSM or UMTS Standards has eight electrical communication pins. Data is exchanged between the mobile terminal 1 and the SIM 15 by sending electrical signals via these communication pins. Contact pads in the SIM card reader 30 electrically couple the mobile terminal 1 to the SIM 15. The SIM 15 includes a central processing unit 32, a directory of the contacts 34 of the user of the mobile terminal 1, and a core memory 36 which stores other information - for example, the unique key Ki.

In accordance with an important feature of the embodiment of the invention, an additional SIM memory 38 is provided by the SIM 15. The SIM memory is shown separately from the core memory 36 in Figure 2, although in practice, the memories may be combined if desired.

As indicated above, data useful to the user of mobile terminal 1 may be stored on the SIM memory 38. For example, this data could be personal data of the user, such as medical information. For example, the data may comprise biometric data, blood type, next of kin, physician contact details, recent medication, identification data, organ donor status and/or the user's picture. The user interface of the mobile terminal 1 may be used to obtain the data which is stored in the SIM store 38. For example, the key pad of the mobile terminal could be used to enter data in alphanumeric form. A camera of the mobile terminal 1, if provided, could be used to capture an image, such as the user's picture, for storage in the SIM memory 38. Of course, data could be provided on the SIM 38 by other means. For example, the data could be provided over the air to the mobile terminal 1, from where it is routed to and stored on the SIM memory 38. Alternatively, the SIM 15 could be removed from the mobile terminal 1 and coupled to a different type of terminal - such as a personal computer with a SIM card reader. The user interface of the personal computer can then be used to obtain and store data in the SIM memory 38.

Of the SIM's eight pins, currently, according to the GSM and UMTS Standards, two of these pins are unassigned pins and one it has been determined is no longer needed.

In accordance with a feature of the embodiment, the two unassigned pins are used as USB communication ports to the SIM 15 and the other (now free) pin (shown at 40, the other pins not being shown for the sake of clarity) is used to operatively connect the SIM 15, and in particular the SIM memory 38 thereof, to a device 42 provided in the mobile terminal, which includes a store 44.

The device 42 may be in the form of a near field communication (NFC) chip. The store 44 is of a sufficient size to be able to store the data present on the SIM memory 38. The store 44 is a non-volatile but writable memory.

The device 42 may include synchronisation means 46 for reading data from the key memory 38 of the SIM 15 and for storing this data in the store 44 of the device 42. This data is obtained from the SIM memory 38 via the pin 40. Synchronisation means 46 is able to mirror and synchronise the store 44 with the SIM memory 38. The synchronisation means 46 may not be provided on the device 42. Instead, the synchronisation means 46 may be provided elsewhere on the mobile terminal 1, or may be provided by the SIM 15.

It is envisaged that the data stored in the SIM memory 48 will be mostly (if not totally) static, i.e. it will not change or will change infrequently. Thus, synchronisation between the SIM memory 38 and the store 44 may only be needed just once (for example on initial power-up of the mobile terminal 1 when the SIM 15 is first coupled thereto). Alternatively, synchronisation may be performed by the synchronisation means each time mobile terminal 1 is powered-up, or each time the SIM 15 is inserted into the SIM card reader 30. Synchronisation could also be performed on another basis, such as at predetermined time intervals (perhaps once a week). Synchronisation could also be performed in response to a command from the user of the mobile terminal 1, for example using the user interface of the mobile terminal 1. Alternatively, synchronisation could be performed in response to a command received over the air from the mobile telecommunications network 3.

As indicated above, the device 42 is an NFC device. The device 42 may comprise a radio frequency (RF) ID tag. NFC devices operate in accordance with recognised Standards, details of which are provided by the NFC Forum (www.nfc-forum.org). NFC devices operate in the unregulated RF band of 13.56MHz and transfer data at up to 424kbits/second. NFC has both a read and write technology. Communication between NFC compatible devices occurs when they are brought within range of each other (for example 20 centimetres, but typically closer). The simple wave or touch between two NFC devices can establish an NFC connection. Once such a connection has been made, data may be transmitted using other known wireless technologies, such as Bluetooth (RTM) or WiFi. The underlying layers of NFC technology follow ISO, ECMA and ETSI Standards. Because the transmission range of NFC devices is short, the devices are inherently secure.

NFC works by magnetic field induction. NFC devices may have a passive communication mode. In this mode an initiator device provides a carrier field and a target device answers by modulating this field. The target device may draw operating power from the initiator-provided electromagnetic field.

The other mode is active communication mode. In this mode, both the initiator device and the target device communicate by generating their own electromagnetic field. In this mode, both devices typically have their own power supply.

The device 42 may operate in either the passive communication mode or the active communication mode. In the active communication mode, the device 42 conveniently receives power from the battery or cell that provides the main power to the mobile telecommunications device 1. Alternatively, the device 42 may be provided with its own battery.

When it is desired to read the data from the store 44 of the device 42, an NFC reader device 48 is brought into proximity of the mobile terminal 1, and in particular of the NFC device 42. Advantageously, the NFC device 42 is provided at or near the periphery of the case of the mobile telecommunications device 1. The NFC reader 48 may read data from the NFC device 42 by initiating a wireless connection using Bluetooth or WiFi, or any other protocol. Data may be extracted from the store 44 when the device 42 is in the passive mode. That is, the NFC reader 48 will generate an electromagnetic carrier field which will power the NFC device 42. The NFC device 42 modulates the electromagnetic field from the NFC reader 48 such that the electromagnetic field carries the data stored in the store 44. The modulation of the field is detected by the reader 48, and this read data can then be stored in the NFC reader 50.

Optionally, the NFC device 42 may be configured to cause the mobile terminal to prompt the user of the mobile terminal to authorise reading of the store 44 by the NFC reader 48, for example using the graphical user interface of the mobile terminal 1. Data from the store 44 may only be released to the NFC reader 48 if the user of the mobile terminal 1 can sense, for example by operating a soft key on the mobile terminal. Additionally, the user of the mobile terminal may be requested to enter a personal identification number (PIN) to authorise reading of the data on the store 44.

The NFC device 42 may advantageously be used to store medical data, as mentioned above. If the user of the mobile terminal 1 were involved in an accident and was injured so that the user could not communicate with medical staff, the medical staff could use the NFC reader 48 to obtain medical data from the store 44. This medical data then allows the medical staff to perform appropriate treatment in dependence upon this medical data.

Once the data from the store 44 is stored in the NFC reader memory 50, the data may be displayed by the SIM reader 48, or may be transferred to another device, such as a personal computer.

Because the NFC device 42 can be read in the passive communication mode, the NFC reader 48 may obtain the data from the store 44 even when no power for the NFC device 42 is available (for example, when the battery of the mobile terminal 1 is flat or damaged, or if the mobile terminal itself is damaged). The NFC device operates independently of the mobile terminal 1. Once data has been stored in the store 44 of the NFC device 42, the data in the store 44 can be read by an BFC reader 48 even if the remainder of the mobile terminal 1 is damaged or destroyed. The data can be read from the store 44 also independently of the operative status of the SIM 15.

Although the embodiment refers primarily to the storage of medical data in the store 44, it should be appreciated that any other data could usefully be stored on the store 44. This data corresponds to data used in identity cards or other functions included on SIMs 15 in the future. The data stored in the store 44 may be used to make payments also.

In the embodiment described the device 42 is provided on the mobile terminal 1. Alternatively, the device may be provided on the SIM 15. The NFC reader would then read the data from the store 44 on the SIM 15. With this arrangement, the SIM memory 38 may be unnecessary.

## Claims

1. A device for storing data and which is associated with a mobile or cellular telecommunications network (3) subscriber identity module (15), the device (42) including a store (44) for storing said data and near field communication means for enabling the data to be read from the store (44).

2. The device of claim 1, which is provided on or in the SIM (15).

3. The device of claim 1 or 2, wherein the data comprises medical information relating to the user of the SIM (15).

4. The device of claim 1,2 or 3, wherein the data comprises biometric data, blood type, next-of-kin, physician contact, recent medication, identification data, organ donor status and/or the user's picture.

5. The device of any one of claims 1 to 4, wherein the SIM (15) includes an integrated circuit for authenticating the SIM (15) with the mobile or cellular network (3) and having a plurality of connecting pins, and wherein the device (42) is operably connected to at least one of said connecting pins (40).

6. The device of any one of claims 1 to 5, wherein the SIM (15) includes a memory (38) for storing the data, and including synchronisation means for synchronising the data between the SIM (15) memory and the store (44).

7. The device of any one of claims 1 to 6, wherein the store (44) comprises a non-volatile but re-writable memory.

8. The device of any one of claims 1 to 7, wherein the near field communication means is operable to co-operate with an external active near field apparatus for allowing that external near field apparatus to read the data from the device (42).

9. The device of claim 8, wherein the external near field apparatus energises the device (42) in order to read the data therefrom.

10. The device of claim 8 or 9, arranged such that the external near field apparatus is able to read said data even if the SIM (15) is damaged or the mobile terminal with which the SIM (15) is associated is inoperative, damaged or has its battery flat or missing.

11. The device of any one of the preceding claims, wherein the device (42) is comprised in a mobile or cellular telecommunications terminal (1).

12. A GSM or UMTS mobile telecommunications network, including a plurality of devices according to any one of claims 1 to 11, associated with respective SIMs of that network.

13. A cellular or mobile telecommunications terminal, including a device as claimed in any one of claims 1 to 12.

14. The terminal of claim 13, including a subscriber identity module.
